# EUROPEAN PATENT APPLICATION

(11) **EP 4 711 415 A1**
(43) Date of publication of application: **18.03.2026**
(21) Application number: 24803434.0
(22) Date of filing: 01.05.2024
(51) Int. Cl.: C08L 29/04, C08K 3/36, C08L 83/04

(54) **ETHYLENE-VINYL ALCOHOL COPOLYMER COMPOSITION AND METHOD FOR PRODUCING SAME, PELLET, FILM, AND METHOD FOR PRODUCING SAME**

(30) Priority: 09.05.2023 JP 2023077417
(71) Applicant: Mitsubishi Chemical Corporation, Tokyo 100-8251 (JP)
(72) Inventor: IKUBO, Eri, Tokyo 100-8251 (JP); HATANAKA, Makoto, Tokyo 100-8251 (JP); TAKESHITA, Keisuke, Tokyo 100-8251 (JP)
(74) Representative: Hoffmann Eitle
(86) International application number: PCT/JP2024/016774
(87) International publication number: WO 2024/232322

(57) **Abstract**

The present disclosure provides an EVOH resin composition that reduces metal adhesion between an EVOH resin and a processing machine surface to prevent excessive deterioration of the resin during film formation and that has excellent long-run properties and film-forming properties. An ethylene-vinyl alcohol copolymer composition comprising: an ethylene-vinyl alcohol copolymer (A); and a silicone mixture (B), wherein the silicone mixture (B) is solid at 25°C.

## Description

### Technical Field

The present disclosure relates to an ethylene-vinyl alcohol copolymer (hereinafter, may be also referred to as "EVOH resin") composition and a method for manufacturing the EVOH resin composition, and a pellet, a film, and the method for manufacturing the same.

### Background Art

EVOH resins have excellent transparency, gas barrier properties such as oxygen gas barrier properties, aroma retaining properties, solvent resistance, oil resistance, mechanical strength, and the like, are formed into films, sheets, bottles, and the like, and are widely used as various packaging materials such as food packaging materials, medical and pharmaceutical packaging materials, industrial chemical packaging materials, and agricultural chemical packaging materials.

However, because an EVOH resin has a relatively active hydroxy group in a molecule, the EVOH resin tends to deteriorate due to heat and tends to cause a problem of coloring during melt-molding.

With regard to the issues described above, for example, JPH 11-106592 A discloses a resin composition containing an EVOH resin (A), acetic acid (B), and magnesium acetate and/or calcium acetate (C), where the content of (B) is 0.05 parts by mass or less per 100 parts by mass of (A), and the content of (C) in terms of metal content is from 0.001 to 0.02 parts by mass per 100 parts by mass of (A). It is described that, by using this resin composition, a molded product having excellent long-run properties during melt-molding, with less fisheyes, streaks, and coloring, and having excellent appearance is produced. It is also described that, even when the molded product is formed into a laminate, an offensive smell is reduced, and excellent interlayer adhesiveness of the laminate is achieved even after secondary processing such as stretching and deep drawing.

Furthermore, JP 2013-82792 A discloses a polyarylene sulfide-based resin composition containing, per 100 parts by weight of polyarylene sulfide (A), from 1 to 50 parts by weight of an EVOH resin (B), from 1 to 25 parts by weight of a compatibilizer (C) that is a modified polysiloxane compound (C1) having, at both terminals, at least one type of functional groups selected from the group consisting of an amino group, an epoxy group, and a carboxyl group and/or a polyisocyanate compound (C2) having two or more isocyanate groups per a molecule, from 30 to 250 parts by weight of magnesium hydroxide (D), and from 15 to 250 parts by weight of a fibrous filler material (E). It is described that, by using this resin composition, excellent electrical properties such as tracking resistance as well as, especially, excellent toughness and excellent mechanical strength, melt flow properties, mold releasability and molded product appearance are achieved, and thus the resin composition is useful in electric component use, such as an electric/electronic component or an automobile electrical component.

### Related Art Document

### Patent Literature

Patent Literature 1: JPH 11-106592 A
Patent Literature 2: JP 2013-82792 A

### Summary

### Technical Problem

The technique described in JPH 11-106592 A achieves excellent long-run properties at the time of melt extrusion molding, causes less fisheyes, streaks, and coloring, and provides a molded product having excellent appearance. However, in recent years, together with the diversification of feed block/die forms in extrusion molding devices and requirements for various high functionalities, such as formation of thinner films or increase in the number of layers of multilayer structures in end products, extrusion molding devices tend to have higher functions. Thus, a resin tends to thermally deteriorate in an extrusion molding device that has become more complex due to higher functionalities, and productivity of products (long-run properties) tends to decrease, and further improvement has been demanded.

Technique described in JP 2013-82792 A achieves, especially, excellent toughness as well as excellent mechanical strength, melt flow properties, mold releasability, and molded product appearance. However, although melt flow properties and the like in injection molding are improved, processability is poor in melt extrusion molding, and thus there is room for improvement.

Thus, in light of such background, the present disclosure provides an EVOH resin composition that reduces metal adhesion between an EVOH resin and a processing machine surface (for example, barrel, die) to prevent excessive deterioration of the resin during film formation and that has excellent long-run properties and film-forming properties.

### Solution to Problem

As a result of diligent research in light of such circumstance, the present inventors found that, by allowing a resin composition containing an EVOH resin to contain a silicone mixture, metal adhesion during film formation is reduced, and long-run properties and film-forming properties are improved.

That is, the present disclosure provides the following aspects.
[1] An ethylene-vinyl alcohol copolymer composition comprising:
   an ethylene-vinyl alcohol copolymer (A); and
   a silicone mixture (B),
   wherein the silicone mixture (B) is solid at 25°C.
[2] The ethylene-vinyl alcohol copolymer composition according to [1], wherein a content of the silicone mixture (B) is from 0.01 to 5 mass% with respect to a total mass of the ethylene-vinyl alcohol copolymer (A) and the silicone mixture (B).
[3] The ethylene-vinyl alcohol copolymer composition according to [1] or [2], wherein the silicone mixture (B) contains silicone and dry silica.
[4] The ethylene-vinyl alcohol copolymer composition according to [3], wherein a mass ratio of the silicone to the dry silica (silicone/dry silica) is from 90/10 to 50/50.
[5] The ethylene-vinyl alcohol copolymer composition according to [3] or [4], wherein the dry silica is fumed silica.
[6] The ethylene-vinyl alcohol copolymer composition according to any one of [1] to [5], wherein the silicone mixture (B) is solid at 250°C.
[7] A method for manufacturing an ethylene-vinyl alcohol copolymer composition, the method comprising:
   melt-mixing a composition raw material containing an ethylene-vinyl alcohol copolymer (A) and a silicone mixture (B),
   wherein the silicone mixture (B) is solid at 25°C.
[8] A pellet comprising the ethylene-vinyl alcohol copolymer composition according to any one of [1] to [6].
[9] A film comprising the ethylene-vinyl alcohol copolymer composition according to any one of [1] to [6].
[10] The film according to [9], wherein a dispersion maximum diameter of the silicone mixture (B) in the film is from 0.1 to 3 µm.
[11] A method for manufacturing a film, the method comprising melt-molding the pellet according to [8].

### Advantageous Effects

The EVOH resin composition of the present disclosure reduces metal adhesion between an EVOH resin and a processing machine surface to prevent excessive deterioration of the resin during film formation and has excellent long-run properties and film-forming properties.

### Description of Embodiments

Hereinafter, the present disclosure will be described in more detail based on embodiments of the present disclosure, but the present disclosure is not limited to these embodiments.

Note that, in the present specification, unless otherwise specified, the expression "from X to Y" (with X and Y being any numbers) encompasses the meaning of "X or greater and Y or less" as well as the meaning of "preferably greater than X" or "preferably smaller than Y".

Furthermore, the expression "X or greater" (X is any numbers) or "Y or less" (Y is any numbers) encompasses "preferably greater than X" or "preferably less than Y".

Note that, in the present specification, "x and/or y (x and y are any configurations or components)" means at least one of x or y, and means three combinations of x only, y only, and x and y.

In the present specification, for numerical ranges described stepwise, the upper limit value or the lower limit value of a numerical range of a certain step can be freely combined with the upper limit value or the lower limit value of a numerical range of another step. In addition, in a numerical range described in the present specification, the upper limit value or the lower limit value of the numerical range can be replaced with a value shown in Examples.

### EVOH Resin Composition

The EVOH resin composition according to an embodiment of the present disclosure (hereinafter, referred to as "the present EVOH resin composition") contains an EVOH resin (A) as a main component and a silicone mixture (B).

That is, the present EVOH resin composition contains the EVOH resin (A) as a base resin, and the content of the EVOH resin (A) in the present EVOH resin composition is usually 70 mass% or greater, preferably 80 mass% or greater, more preferably 90 mass% or greater, and particularly preferably 95 mass% or greater.

Hereinafter, the respective components will be described.

### EVOH Resin (A)

The EVOH resin (A) used in the present embodiment is usually a resin produced by saponification of an ethylene-vinyl ester copolymer, which is a copolymer of ethylene and a vinyl ester monomer, and is a water-insoluble thermoplastic resin.

As the vinyl ester monomer, vinyl acetate is typically used from the viewpoints of good market availability and good impurity treatment efficiency during manufacturing. Examples of other vinyl ester monomers besides the vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester that can be used usually has from 3 to 20 carbons, preferably from 4 to 10 carbons, and particularly preferably from 4 to 7 carbons. A single type of these is usually used alone; however, as necessary, a plurality of types of these may be used simultaneously.

As the polymerization method to copolymerize the ethylene and the vinyl ester monomer, any known polymerization method, such as solution polymerization, suspension polymerization, or emulsion polymerization, can be used; however, solution polymerization using methanol as a solvent is usually used. Furthermore, saponification of the resulting ethylene-vinyl ester copolymer can also be carried out by a known method.

The EVOH resin (A) thus manufactured is mainly made of a structural unit derived from ethylene and a vinyl alcohol structural unit and contains a small amount of a vinyl ester structural unit remaining without being saponified.

The content of the ethylene structural unit in the EVOH resin (A) is usually from 20 to 60 mol%, preferably from 25 to 50 mol%, and particularly preferably from 25 to 35 mol%. The content of the ethylene structural unit can be controlled by the pressure of ethylene in the copolymerization of the vinyl ester monomer and ethylene. When the content is too low, the gas barrier properties under high humidity and melt moldability tend to decrease. Conversely, when the content is too high, the gas barrier properties tend to decrease.

The content of the ethylene structural unit can be measured based on, for example, ISO 14663.

The degree of saponification of the EVOH resin (A) is usually from 90 to 100 mol%, preferably from 95 to 100 mol%, and particularly preferably from 99 to 100 mol%. The degree of saponification can be controlled by the amount of a saponification catalyst (usually, an alkaline catalyst such as sodium hydroxide is used), the temperature, the time, or the like at the time of saponification of the ethylene-vinyl ester copolymer. When the degree of saponification is too low, gas barrier properties, thermal stability, moisture resistance, and the like tend to decrease.

The degree of saponification of the EVOH resin (A) can be measured based on JIS K 6726 (provided that the EVOH resin is used in the form of a solution with the EVOH resin uniformly dissolved in a water-methanol solvent).

The melt flow rate (MFR) (210°C, load 2160 g) of the EVOH resin (A) is usually from 0.5 to 100 g/10 min, preferably from 1 to 50 g/10 min, and particularly preferably from 3 to 35 g/10 min. When the MFR is too high, stability during film formation tends to be deteriorated. When the MFR is too low, the viscosity tends to be too high, which leads to difficulty in melt extrusion.

The MFR is an indicator of the degree of polymerization of the EVOH resin (A) and can be adjusted by the amount of a polymerization initiator or the amount of a solvent in the copolymerization of the ethylene and the vinyl ester monomer.

Moreover, the EVOH resin (A) may further contain, within a range that does not impair the effects of the present disclosure, a structural unit derived from a comonomer described below (for example, 10 mol% or less of the EVOH resin (A)).

Examples of the comonomer include olefins such as propylene, 1-butene, and isobutene; hydroxy group-containing α-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, **N-**vinylformamide, and N-vinylacetamide; vinyl cyanides such as acrylonitrile and methacrylonitrile; vinyl ethers, such as alkyl vinyl ethers having an alkyl group with 1 to 18 carbons, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. One of these may be used alone or two or more thereof may be used in combination.

In particular, hydroxy group-containing α-olefins are preferred, and 3-butene-1,2-diol and 5-hexene-1,2-diol are particularly preferred. In a case where the hydroxy group-containing α-olefins are copolymerized, the resulting EVOH resin has a primary hydroxy group in a side chain. Such an EVOH resin having a primary hydroxy group in a side chain, particularly an EVOH resin having a 1,2-diol structure in a side chain, is preferred because good secondary moldability is achieved while gas barrier properties are maintained.

In a case where the EVOH resin (A) used in the present embodiment has a primary hydroxy group in a side chain, the content of the structural unit derived from a monomer having the primary hydroxy group is usually from 0.1 to 20 mol%, preferably from 0.5 to 15 mol%, and particularly preferably from 1 to 10 mol%, of the EVOH resin (A).

Furthermore, as the EVOH resin (A), a "post-modified" EVOH resin, such as an esterified, urethanized, acetalized, cyanoethylated, or oxyalkylenated EVOH resin, can also be used.

In a case where the post-modified EVOH resin is used, the modification ratio thereof is usually 10 mol% or less, and preferably 4 mol% or less. In a case where the modification ratio of the used EVOH resin is too high, thermal deterioration tends to occur, and long-run properties tend to decrease.

Furthermore, the EVOH resin (A) may be a mixture of EVOH resins having different contents of ethylene structural units, degrees of saponification, degrees of polymerization, copolymerization components, and the like.

### Silicone Mixture (B)

The silicone mixture (B) is a mixture containing a silicone as an essential component and is a mixture of a silicone (oil component) and a thermoplastic resin and/or a fine particle carrier such as silica. In particular, the silicone mixture (B) is preferably a mixture of a silicone and a fine particle carrier such as silica.

The silicone mixture (B) does not have a melting point and is preferably solid at 25°C from the viewpoint of handling during processing and is preferably solid at a high temperature of 250°C from the viewpoint of film-forming properties. The silicone mixture (B) is preferably in a pellet form from the viewpoint of handling during processing and is preferably a solid pellet form at 25 to 250°C. When the silicone mixture (B) is liquid at 25°C, dispersibility of the silicone mixture (B) in the resin composition is poor, and the effect of the present disclosure is less likely to be achieved.

The pellet size of the silicone mixture (B) is preferably from 0.5 to 10 mm, and more preferably from 1 to 6 mm, from the viewpoint of dispersibility of the silicone mixture (B) in the resin composition.

### Silicone

The silicone that is an essential component of the silicone mixture (B) is not particularly limited, and specific examples thereof include polydimethylsiloxane, polyphenylmethylsiloxane, methylhydrogenpolysiloxane, and mixtures of these. Among these, polydimethylsiloxane and polyphenylmethylsiloxane are preferred, and polydimethylsiloxane is more preferred. One of these may be used alone or two or more thereof may be used in combination.

Furthermore, a modified silicone may be used taking affinity for the EVOH resin (A) in consideration. Examples of the modified silicone include modified silicones produced by substituting a part of a functional group of a poly(diorganosiloxane) (side chain or terminal) with a chlorophenyl group, an alkyl group, a fatty acid ester group, a hydroxy group, a nitrile group, a carboxy group, an amino group, an epoxy group, a fluoroalkyl group, or the like.

As the silicone, each one of unmodified silicones and modified silicones may be used alone, or a combination of two or more types of unmodified silicones and/or modified silicones may be used; however, an unmodified silicone is preferably used because a modified silicone tends to be thickened due to crosslinking under extrusion conditions at high temperatures and long-run properties tend to be poor.

From the viewpoints of metal adhesion reduction effect and capability of reducing stickiness due to bleeding out to the EVOH resin (A) surface, a high molecular weight silicone having a viscosity of 1 × 10⁵ mm²/s or greater and/or a high molecular weight silicone having a weight average molecular weight (Mw) of approximately 400000 to 700000 is preferably used as the silicone.

Since the high molecular weight silicone has a smaller change in kinematic viscosity with respect to temperature change compared to those of petroleum-based oils and is less likely to be dispersed in another material because the viscosity does not decrease even when the temperature is increased, from the viewpoint of uniformly dispersing a high molecular weight silicone oil having a high viscosity, and from the viewpoint of improving workability at the time of addition to a resin, a pellet-formed master batch produced by mixing with a thermoplastic resin and/or a fine particle carrier such as silica in advance is preferably used.

For example, a material produced by allowing the aforementioned silicone to be carried on a fine particle carrier such as silica (silicon dioxide) or the like can be used. Examples of the carrier other than silica include carbonates such as calcium carbonate and barium carbonate, silicates such as calcium silicate, barium silicate, and magnesium silicate, phosphates such as calcium phosphate, barium phosphate, magnesium phosphate, zirconium phosphate, and apatite, metal oxides such as alumina, graphite, zeolite, lamellar clay mineral and the like, polyethylene, polyurethane, cellulose, polyamide, polyvinyl formal, a phenolic resin, an epoxy resin, and a urea resin. One type of these can be used, or two or more types thereof may be used in combination.

Examples of the silica particles include dry silica such as fumed silica, pyrogenic silica, and molten silica, precipitated silica, and pulverized silica. One of these may be used alone or two or more thereof may be used in combination. In particular, from the viewpoint of dispersibility, the carrier is preferably dry silica, and more preferably fumed silica.

Examples of the commercially available product in which silicone is carried on a dry silica include GENIOPLAST ^{™} PELLET S, available from Wacker Asahikasei Silicone Co., Ltd.

The average particle size of the silica particles is usually from 10 to 400 nm, and preferably in a range of 30 to 100 nm. Note that the average particle size used herein can be determined as a median diameter (d50, based on volume) based on cumulative distribution from measurement values of particle size distribution determined by the laser diffraction/scattering method using a commercially available laser diffraction/scattering particle size distribution analyzer.

Furthermore, the content ratio of the silicone to the dry silica contained in the silicone mixture (B) (silicone/dry silica) is preferably from 90/10 to 50/50, more preferably from 85/15 to 60/40, and even more preferably from 80/20 to 70/30, from the viewpoint of film-forming properties.

One type of these silicone mixtures (B) may be used, or a combination of two or more types thereof may be used.

The content of the silicone mixture (B) is preferably from 0.01 to 5 mass%, more preferably from 0.05 to 4 mass%, and preferably from 0.1 to 3 mass%, with respect to the total mass of the ethylene-vinyl alcohol copolymer (A) and the silicone mixture (B). When the content is too large, the resin viscosity during melting decreases, fluidity becomes too high, and thus vent-up or discharge failure tends to occur. When the content is too small, the metal adhesion reduction effect cannot be achieved, and the long-run properties tend to be poor.

The content of the silicone mixture (B) can be measured, in terms of silicon, by a known analytical method. For example, after a certain amount of the present EVOH resin composition is weighed, the present EVOH resin composition is mixed with a flux and heated and melted, the resultant is dissolved in water and used as a test liquid, and the measurement can be performed by quantifying a silicon amount by the molybdenum blue absorption spectrophotometry. Furthermore, as a more simple and convenient method, only the EVOH resin in the present EVOH resin composition is heated and dissolved in a water/alcohol solvent, and then the content of the silicone mixture (B) can be measured based on the residue mass obtained by hot filtration.

### Boron Compound

The present EVOH resin composition preferably further contains a boron compound from the viewpoint of further enhancing the effect of suppressing increase in viscosity over time during melt-molding.

Examples of the boron compound include boric acid or metal salts thereof. Examples thereof include boric acid, calcium borate, cobalt borate, zinc borate (for example, zinc tetraborate, zinc metaborate), aluminum-potassium borate, ammonium borate (for example, ammonium metaborate, ammonium tetraborate, ammonium pentaborate, ammonium octaborate), cadmium borate (for example, cadmium orthoborate, cadmium tetraborate), potassium borate (for example, potassium metaborate, potassium tetraborate, potassium pentaborate, potassium hexaborate, potassium octaborate), silver borate (for example, silver metaborate, silver tetraborate), copper borate (for example, copper(II) borate, copper metaborate, copper tetraborate), sodium borate (for example, sodium metaborate, sodium diborate, sodium tetraborate, sodium pentaborate, sodium hexaborate, sodium octaborate), lead borate (for example, lead metaborate, lead hexaborate), nickel borate (for example, nickel orthoborate, nickel diborate, nickel tetraborate, nickel octaborate), barium borate (for example, barium orthoborate, barium metaborate, barium diborate, barium tetraborate), bismuth borate, magnesium borate (for example, magnesium orthoborate, magnesium diborate, magnesium metaborate, trimagnesium tetraborate, pentamagnesium tetraborate), manganese borate (for example, manganese(II) borate, manganese metaborate, manganese tetraborate), lithium borate (for example, lithium metaborate, lithium tetraborate, lithium pentaborate), and borate minerals, such as borax, kernite, inyoite, kotoite, suanite, and szaibelyite. One of these may be used alone or two or more thereof may be used in combination. In particular, borax, boric acid, and sodium borate (for example, sodium metaborate, sodium diborate, sodium tetraborate, sodium pentaborate, sodium hexaborate, sodium octaborate) are preferred.

The content of the boron compound is not particularly limited, and the lower limit of the content is preferably 1 ppm or greater, more preferably 10 ppm or greater, particularly preferably 20 ppm or greater, and especially preferably 50 ppm or greater, in terms of boron with respect to the amount of the EVOH resin (A). The upper limit of the content is preferably 1000 ppm or less, more preferably 500 ppm or less, particularly preferably 300 ppm or less, and especially preferably 100 ppm or less, in terms of boron with respect to the amount of the EVOH resin (A). By setting the content to the range, increase in the viscosity over time during melt-molding can be suppressed. Although the reason for exhibiting excellent effect by the use of the particular amount of the boron compound is not known, it is presumed that this is because discharging efficiency of the resin composition is enhanced due to adjustment of the melt viscosity.

The content in terms of boron of the boron compound can be measured by a known analytical method. For example, after wet degradation of the present EVOH resin composition, the volume was adjusted to a constant volume, and this was used as a test liquid. The boron amount of the test liquid can be quantified by the inductively coupled plasma atomic emission spectroscopy (ICP-AES).

### Additional Thermoplastic Resin

The present EVOH resin composition may contain a thermoplastic resin other than the EVOH resin (A) in a range that does not impair the effect of the present disclosure (for example, usually 30 mass% or less, preferably 20 mass% or less, and particularly preferably 10 mass% or less, of the present EVOH resin composition). Note that the lower limit value is usually 0 mass%.

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. One of these may be used alone or two or more thereof may be used in combination.

### Additional Compounding Agent

Furthermore, the present EVOH resin composition may contain a compounding agent that is typically blended in an EVOH resin in a range that does not impair the effect of the present disclosure. Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxy group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a coloring agent, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

### Method for Manufacturing EVOH Resin Composition

The present EVOH resin composition can be manufactured by mixing the EVOH resin (A) and the silicone mixture (B) using a known method, such as a dry blending method or a melt mixing method. Among these, manufacturing is preferably performed by including melt-mixing a composition raw material containing the EVOH resin (A) and the silicone mixture (B). Furthermore, these manufacturing methods can be optionally combined.

However, because the EVOH resin (A) and the silicone mixture (B) are less likely to be miscible, the silicone mixture (B) is usually dispersed as microparticles in a matrix of the EVOH resin (A) in the present EVOH resin composition.

Examples of the dry blending method include a method of dry-blending the EVOH resin (A) and the silicone mixture (B), which are in the form of pellets, using a tumbler or the like.

Examples of the melt mixing method include (i) a method of producing a pellet or a molded product by melt-kneading a dry-blended material produced by dry-blending the EVOH resin (A) and the silicone mixture (B), which are in the form of pellets, and (ii) a method of producing a pellet or a molded product by preparing a master batch in which a high concentration of a silicone mixture is blended in an EVOH resin in advance, adding this master batch to the melted EVOH resin (A), and melt-kneading the resultant.

To produce the present EVOH resin composition, as described above, these various methods can be combined. Among those, from the viewpoint of productivity and producing a resin composition that exhibits more significant effects of the present disclosure, a method of (i) is preferred. In a case where the additional thermoplastic resin and an additional compounding agent are used, they are blended by a common process according to the aforementioned manufacturing method.

The form of the present EVOH resin composition produced as described above can be freely chosen but is preferably pellets.

The pellets may be in, for example, a spherical, oval, cylindrical, cubic, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, and more preferably from 2.5 to 5.5 mm, and a major axis length is usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-form EVOH resin (A) used in each of the manufacturing methods are also preferably the same.

Note that, when the present EVOH resin composition is in the form of pellets, preferably, a known lubricant is adhered to the surface of the pellets from the viewpoint of stabilizing the feed properties during melt-molding. Examples of the type of lubricant include higher fatty acids having 12 or more carbons (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. Furthermore, the content of the lubricant is usually 5 mass% or less, and preferably 1 mass% or less, of the present EVOH resin composition. The lower limit is usually 0 mass%.

The present EVOH resin composition is prepared in various forms, such as, besides the pellets, powder, or liquid, and is provided as a molding material for various molded products. In particular, in the present embodiment, in a case where the present EVOH resin composition is provided as a material for use in melt-molding, the effects of the present disclosure tend to be more efficiently achieved, which is preferable.

The peel strength from an aluminum plate of the present EVOH resin composition is preferably less than 100%, more preferably 95% or less, and even more preferably 90% or less, in a case where the peel strength from a system containing no silicone mixture (B) is 100%, from the viewpoint of reducing metal adhesion. The lower limit value is usually 0%, preferably 10% or greater, more preferably 50% or greater, and even more preferably 80% or greater. The peel strength from an aluminum plate of the present EVOH resin composition can be measured by, for example, the method described in Examples below.

In a case where a torque of a system containing no silicone mixture (B) under conditions at 230°C and at 50 rpm for 1 hour is 100%, the viscosity increase percentage of the present EVOH resin composition is preferably in a range of 60 to 150%, more preferably in a range of 70 to 140%, and even more preferably in a range of 75 to 130%. Furthermore, the upper limit value is preferably 100% or less, more preferably 95% or less, and even more preferably 90% or less. The viscosity increase percentage of the present EVOH resin composition can be measured by, for example, the method described in Examples below.

Note that the present EVOH resin composition also includes a resin composition produced by mixing an additional resin in addition to the EVOH resin (A) used in the present EVOH resin composition.

The present EVOH resin composition is prepared as a resin composition in various forms such as pellets or a powder, and is provided as a material for various molded bodies and multilayer structures. For example, a molded body is manufactured by melt-molding resin composition pellets. Examples of the molded body include a molded body (for example, monolayer film) molded by using the present EVOH resin composition, and a multilayer structure having at least one layer made of the present EVOH resin composition. Because the resulting EVOH resin composition reduces metal adhesion during film formation and has excellent long-run properties and film-forming properties, the resulting molded body and multilayer structure are also excellent in these. In a case where a film is manufactured as a molded body, the film is free of thickness unevenness and has good appearance.

### Molded Body

A molded body according to an example of an embodiment of the present disclosure (hereinafter, referred to as "the present molded body") is produced by molding the present EVOH resin composition.

Examples of the shape of the present molded body include a film, a sheet, a tape, a cup, a tray, a tube, a bottle, a container, a pipe, a filament, an extruded article with an atypical cross-section, and various irregularly-shaped molded articles.

The method for molding the present resin composition is not particularly limited, and any molding method can be applied as long as the molding method is applicable to a general resin composition. Examples of the molding method include extrusion molding, blow molding, injection molding, and thermoforming.

Because the silicone mixture (B) in the present molded body is not miscible with the EVOH resin (A) and stays as a solid without being melted during molding, the silicone mixture (B) is finely dispersed as dispersion particles in a matrix of the EVOH resin (A). Because the silicone mixture (B) is finely dispersed as dispersion particles in the molded body, excellent film-forming properties are achieved.

As the form of the dispersion particles of the silicone mixture (B) in the molded body, the maximum diameter of the dispersion particle is preferably 3 µm or less, more preferably 2.5 µm or less, even more preferably 2 µm or less, and particularly preferably 1.5 µm or less. The lower limit value is usually 0.01 µm or greater, and preferably 0.1 µm or greater.

Furthermore, the minimum diameter of the dispersion particle is preferably 2 µm or less, more preferably 1.5 µm or less, even more preferably 1 µm or less, and particularly preferably 0.8 µm or less. The lower limit value is usually 0.01 µm or greater, and preferably 0.1 µm or greater.

Furthermore, the area of a circle of the dispersion particle is preferably 3.5 µm² or less, more preferably 3 µm² or less, even more preferably 2 µm² or less, and particularly preferably 1.5 µm² or less. The lower limit value is usually 0.01 µm² or greater, and more preferably 0.05 µm² or greater.

As the measurement methods of the maximum diameter, the minimum diameter, and the area of the circle of the silicone mixture (B) particle, for example, the methods described in the following Examples can be used.

### Multilayer Structure

A multilayer structure according to an embodiment of the present disclosure (hereinafter, referred to as "the present multilayer structure") has a layer made of the present EVOH resin composition. When the layer made of the present EVOH resin composition (hereinafter, simply referred to as "the present EVOH resin composition layer") is laminated with an additional substrate containing a thermoplastic resin other than the present EVOH resin composition as a main component (hereinafter, resin used in the substrate may be referred to as "substrate resin"), strength can be further imparted, the present EVOH resin composition layer can be protected from the influence of moisture or the like, and other functions can be imparted.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-a-olefin (α-olefin having 4 to 20 carbons) copolymers; polypropylene-based resins, such as polypropylene and propylene-α-olefin (α-olefin having 4 to 20 carbons) copolymers; polyolefin-based resins in a broad sense including (unmodified) polyolefin-based resins, such as polybutene, polypentene, polycyclic olefin-based resins (polymers having a cyclic olefin structure in at least one of a main chain or a side chain), and modified olefin-based resins, such as unsaturated carboxylic acid-modified polyolefin-based resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide-based resins (including copolymerized polyamides); poly(vinyl chloride); poly(vinylidene chloride); acrylic resins; polystyrene-based resins; vinyl ester-based resins; polyester elastomers; polyurethane elastomers; polystyrene elastomers; halogenated polyolefins, such as chlorinated polyethylene and chlorinated polypropylene; and aromatic or aliphatic polyketones. One of these may be used alone or two or more thereof may be used in combination.

Among these, the substrate resin is preferably a polyamide-based resin, a polyolefin-based resin, a polyester-based resin, or a polystyrene-based resin, which are hydrophobic resins, and more preferably a polyolefin-based resin, such as a polyethylene-based resin, a polypropylene-based resin, a polycyclic olefin-based resin, or an unsaturated carboxylic acid-modified polyolefin-based resin thereof. In particular, a polycyclic olefin-based resin is suitably used as a hydrophobic resin.

When the present EVOH resin composition layers are denoted by a (a1, a2, ...) and the substrate resin layers are denoted by b (b1, b2, ...), the layer configuration of the present multilayer structure may be any combination such as a/b, b/a/b, a/b/a, a1/a2/b, a/b1/b2, b2/b1/a/b1/b2, or b2/b1/a/b1/a/b1/b2. When a recycled layer containing a mixture of the present EVOH resin composition and a thermoplastic resin other than the present EVOH resin composition, which is produced by remelt-molding an end, a defective product, or the like generated in the process of manufacturing the multilayer structure, is denoted by R, the layer configuration can also be b/R/a, b/R/a/b, b/R/a/R/b, b/a/R/a/b, b/R/a/R/a/R/b, or the like. The number of layers of the present multilayer structure in terms of the total number is usually from 2 to 15 and preferably from 3 to 10. In the layer configuration described above, an adhesive resin layer containing an adhesive resin may be interposed between the layers, as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin-based polymers produced by chemically bonding an unsaturated carboxylic acid or anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone or two or more thereof may be used in combination.

In the present multilayer structure, when an adhesive resin layer is used between the present EVOH resin composition layer and the substrate resin layer, the adhesive resin layer is located on both sides of the present EVOH resin composition layer, and therefore use of an adhesive resin having excellent hydrophobicity is preferable.

The substrate resin or the adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the spirit of the present disclosure is not impeded (for example, 30 mass% or less, and preferably 10 mass% or less, with respect to the entire resin). One of these may be used alone or two or more thereof may be used in combination.

The present EVOH resin composition layer and the substrate resin layer can be laminated (including the case of interposing an adhesive resin layer) by a known method. Examples thereof include a method of melt-extrusion laminating the substrate resin to a film, a sheet, or the like of the present EVOH resin composition, a method of melt-extrusion laminating the present EVOH resin composition to the substrate resin layer, a method of co-extruding the present EVOH resin composition and the substrate resin, a method of dry laminating the present EVOH resin composition (layer) and the substrate resin (layer) using a known adhesive such as an organic titanium compound, an isocyanate compound, a polyester compound, or a polyurethane compound, and a method of applying a solution of the present EVOH resin composition onto the substrate resin and then removing the solvent. Among these, manufacturing is preferably performed by melt-molding the present EVOH resin composition layer, and specifically by a co-extrusion method, from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is too low, stretchability deteriorates, whereas when the stretching temperature is too high, a stable stretched state is difficult to maintain.

The present multilayer structure after the stretching treatment may be subjected to heat setting for the purpose of imparting dimensional stability. The heat setting can be carried out by a well-known means; for example, the stretch-treated present multilayer structure is heat-treated usually at a temperature of 80 to 180°C and preferably at a temperature of 100 to 165°C usually for about 2 to 600 seconds while the stretch-treated present multilayer structure is kept in a state of tension.

In the case of using the stretch-treated present multilayer structure as a shrink film, in order to impart heat shrinkability, the stretch-treated present multilayer structure is not subjected to the heat setting described above, but subjected to a treatment such as application of cool air to the present multilayer structure after the stretching treatment to cool-set the structure.

The thickness of the present multilayer structure (including a stretched multilayer structure), and the thicknesses of the present EVOH resin composition layer, the substrate resin layer, and the adhesive resin layer constituting the multilayer structure cannot be generally defined due to the layer configuration, the type of the substrate resin, the type of the adhesive resin, the application, the packaging form, the required physical properties, and the like, but the thickness of the present multilayer structure (including a stretched multilayer structure) is usually from 10 to 5000 µm, preferably from 30 to 3000 µm, and particularly preferably from 50 to 2000 µm. The thickness of the present EVOH resin composition layer is usually from 1 to 500 µm, preferably from 3 to 300 µm, and particularly preferably from 5 to 200 µm. The thickness of the substrate resin layer is usually from 5 to 3000 µm, preferably from 10 to 2000 µm, and particularly preferably from 20 to 1000 µm. The thickness of the adhesive resin layer is usually from 0.5 to 250 µm, preferably from 1 to 150 µm, and particularly preferably from 3 to 100 µm.

Furthermore, the thickness ratio of the present EVOH resin composition layer to the substrate resin layer (present EVOH resin composition layer/substrate resin layer) in the present multilayer structure is usually from 1/99 to 50/50, preferably from 5/95 to 45/55, and particularly preferably from 10/90 to 40/60, in terms of the ratio of the thickest layers to each other when there is a plurality of layers for each type of layer. The thickness ratio of the present EVOH resin composition layer to the adhesive resin layer (present EVOH resin composition layer/adhesive resin layer) in the present multilayer structure is usually from 10/90 to 99/1, preferably from 20/80 to 95/5, and particularly preferably from 50/50 to 90/10, in terms of the ratio of the thickest layers to each other when there is a plurality of layers for each type of layer.

A multilayer container, such as a cup or a tray, can also be produced using the present multilayer structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

A monolayer film produced by molding the present **EVOH** resin composition or a container or lid material made of the present multilayer structure, such as a bag, a cup, a tray, a tube, or a bottle, is useful for various packaging materials for general foods, seasonings such as mayonnaise and dressing, fermented foods such as miso, oil and/or fat foods such as salad oil, beverages, cosmetics, pharmaceuticals, and the like.

### Examples

Hereinafter, the present disclosure will be specifically described with reference to Examples. However, the present disclosure is in no way limited to the following Examples.

In the Examples, the term "parts" means that the value is based on mass.

Prior to the examples, the following components were prepared.

### EVOH

- EVOH (A1): Ethylene content: 29 mol%; MFR: 8 g/10 min (210°C; load: 2160 g); degree of saponification: 99.7 mol%

### Polysiloxane Compound

- Silicone mixture (B1): "GENIOPLAST Pellet-S" available from Wacker Asahikasei Silicone Co., Ltd. (content of polydimethylsiloxane in the master batch: approximately 70 mass%; content of fumed silica: approximately 30 mass%; solid at 25 to 250°C; melting point: none)
- Silicone oil (B2): Unmodified polydimethylsiloxane (straight silicone oil), "KF-96" available from Shin-Etsu Chemical Co., Ltd.; kinematic viscosity: 500 mm²/s
- Silicone oil (B3): Unmodified polydimethylsiloxane (straight silicone oil), "KF-96H" available from Shin-Etsu Chemical Co., Ltd.; kinematic viscosity: 10000 mm²/s

### Example 1

An EVOH (A1) having an ethylene content of 29 mol% and GENIOPLAST Pellet-S (B1) were dry-blended in a manner that an amount of (B1) was 0.2 mass% with respect to a total amount of (A1) and (B1), and thus a mixture was produced. Then, the mixture was fed to a twinscrew extruder (20 mmφ) having a die with two holes and extruded under the following extrusion conditions. The discharged strand was cooled and solidified in a water tank. Then, air was blown to the solidified strand to remove water droplets on the strand surface, then the strand was cut, and thus pellets of the EVOH resin composition were produced.

### Extrusion Condition

- Set temperature of extruder (°C): C1/C2/C3/C4/C5/C6
   = 150/200/210/210/210/210
- Screw rotation speed: 300 rpm

### Preparation of Melt-Extruded Monolayer Film

The resulting pellets of the EVOH resin composition were extruded under the following conditions, and thus a melt-extruded monolayer film was produced.
- Extruder: Plastograph EC-plus, available from Brabender
- Screw: Single screw, 20 mmφ, full-flight
- Set temperature of cylinder part: 190 to 210°C
- Set temperature of cooling roll: 80°C
- Film thickness: 20 µm

### Examples 2 to 4 and Comparative Examples 1 to 8

Pellets of each EVOH resin composition were produced in the same manner as in Example 1 except for changing the type, content, and kinematic viscosity of the polysiloxane compound to those listed in Table 1. Furthermore, by using the pellets of the EVOH resin composition, a melt-extruded monolayer film was produced in the same manner as in Example 1.

Various evaluations described below were performed by using the resulting pellets of EVOH resin compositions of Examples 1 to 4 and Comparative Examples 1 to 8, and the melt-extruded monolayer films produced from the pellets. The results are shown in Table 2 below.

### Metal Adhesion Evaluation

A sheet having a thickness of 1 to 2 mm was produced from the EVOH resin composition pellets using a vacuum hot press. A resin piece having a size of a 10 mm length × 10 mm width was cut out from the resulting sheet. The EVOH resin piece was sandwiched by two aluminum plates (pure aluminum A1050P, 10 cm length × 3 cm width) at a position located at 2 cm from an edge of a long side direction and 1.5 cm from an edge of a short side direction of the aluminum plates, and hot pressing was performed under conditions at 230°C, at a pressure of 3.06 kg/cm², for a heating time of 1 minute (preheating: 3 minutes; cooling: 1 minute) to adhere these, and thus a peeling test piece was prepared.

The aluminum plates were opened at a center of the prepared test piece, the both aluminum plates were pulled toward opposite directions at a pulling speed of 100 mm/min by using an autograph (AGS-H, available from Shimadzu Corporation), and the peel strength (adhesive strength) between the EVOH resin composition and the aluminum plates were determined. The tests were performed five times (N = 5), and an average of stable values of peeling test strength (N) was determined. The evaluation result was shown by a reduction percentage (%) of an adhesive strength when Blank (herein, Comparative Example 7) was assigned a value of 100%, and the evaluation result based on the following criteria was also shown.

### Evaluation Criteria

⊚ (Excellent): Excellent reduction effect of metal adhesion was achieved (80% or greater and 95% or less)
○ (Very good): Excessive reduction effect of metal adhesion was achieved (less than 80%)
△ (Good): Moderate reduction effect of metal adhesion was achieved (greater than 95% and less than 100%)
× (Poor): No reduction of metal adhesion was observed (100%)

### Viscosity Increase Evaluation

Using the Plastograph, available from Brabender, the EVOH resin composition pellets were kneaded at 230°C, at 50 rpm, for 1 hour. The evaluation result was shown by a viscosity increase percentage (%) when a torque at 1 hour of kneading of Blank (herein, Comparative Example 7) was assigned a value of 100%, and the evaluation result based on the following criteria was also shown.

### Evaluation Criteria

⊚ (Excellent): Reduction in torque was confirmed
○ (Very good): Equivalent of Blank
× (Poor): Remarkable thickening behavior was observed compared to Blank

### Film-Forming Properties

Appearance at the time of film formation of the melt-extruded monolayer film was evaluated based on the following criteria on a scale of A to E. The evaluation results are shown.

### Evaluation Criteria

A: Good appearance without thickness unevenness
B: Good appearance with slight thickness unevenness
C: Small holes were observed during film formation
D: Holes of 1 cm or larger were observed during film formation
E: No film was formed

### Dispersion Particle Size

A cross-sectional sample of the obtained monolayer film was cut out in a direction parallel to a flow of film formation by using a microtome, and used as a sample. This sample was observed at a magnification of 2365 times by using a laser microscope (OLS5000, available from Olympus Corporation), and "the maximum diameter, the minimum diameter, and the area of a circle of a particle" of each polysiloxane particle observed in the cross-sectional sample were measured, and average values were determined. Note that an image analysis software Quick Grain was used for measurement of the dispersion particle size.

**[Table 1]**

| | EVOH | Polysiloxane compound | | | |
|---|---|---|---|---|---|
| | | Type | | Kinematic viscosity | Content |
| | | | | (mm²/s, 25°C) | (mass%) |
| Example 1 | A1 | B1 | GENIOPLAST Pellet-S | Solid | 0.2 |
| Example 2 | A1 | B1 | | Solid | 0.5 |
| Example 3 | A1 | B1 | | Solid | 1 |
| Example 4 | A1 | B1 | | Solid | 3 |
| Comparative Example 1 | A1 | B2 | Silicone oil | 500 | 0.5 |
| Comparative Example 2 | A1 | B2 | | 500 | 1 |
| Comparative Example 3 | A1 | B2 | | 500 | 3 |
| Comparative Example 4 | A1 | B3 | | 10000 | 0.5 |
| Comparative Example 5 | A1 | B3 | | 10000 | 1 |
| Comparative Example 6 | A1 | B3 | | 10000 | 3 |
| Comparative Example 7 | A1 | - | None | - | - |
| Comparative Example 8 | A1 | B3 | Silicone oil | 10000 | 5 |

**[Table 2]**

| | Analysis of pellets | | Analysis of film | | | |
|---|---|---|---|---|---|---|
| | Metal adhesion reduction evaluation | Thickening behavior 230°C, 1h | Film-forming propertie s | Dispersion particle size of polysiloxane compound | | |
| | | | | Maximum diameter | Minimum diameter | Area of circle |
| | | | | µm | µm | µm² |
| Example 1 | ⊚ (95%) | ⊚ (88%) | A | 0.4 | 0.3 | 0.2 |
| Example 2 | ⊚ (90%) | ⊚ (80%) | A | 0.5 | 0.4 | 0.4 |
| Example 3 | ⊚ (90%) | ⊚ (83%) | A | 0.9 | 0.6 | 0.8 |
| Example 4 | ○ (79%) | ⊚ (79%) | A | 1.1 | 0.6 | 1.1 |
| Comparativ e Example 1 | ○ (69%) | ⊚ (86%) | C | 4.0 | 0.5 | 3.9 |
| Comparativ e Example 2 | ○ (68%) | ⊚ (82%) | C | 4.4 | 0.5 | 4.6 |
| Comparativ e Example 3 | ○ (65%) | ⊚ (80%) | D | - | - | - |
| Comparativ e Example 4 | ○ (70%) | ⊚ (84%) | B | 3.6 | 0.6 | 3.9 |
| Comparativ e Example 5 | ○ (77%) | ⊚ (83%) | B | 7.6 | 0.8 | 9.6 |
| Comparativ e Example 6 | ⊚ (83%) | ⊚ (83%) | B | 8.0 | 0.6 | 9.7 |
| Comparativ e Example 7 | × (100%) | ○ (100%) | A | - | - | - |
| Comparativ e Example 8 | Processability deteriorated due to frequent occurrence of vent-up | | E | - | - | - |

Based on Table 2 above, the EVOH resin composition of each of Examples 1 to 4 containing the silicone mixture (B) was capable of reducing metal adhesion at the time of film formation and suppressing thickening behavior to an acceptable range, and thus prevented excessive deterioration of the resin during film formation and improved long-run properties, compared to the EVOH resin composition of Comparative Example 7 containing no silicone mixture (B).

Furthermore, the **EVOH** resin composition of each of Comparative Examples 1 to 6 and 8 containing a silicone oil in place of the silicone mixture (B) had poor film-forming properties. In particular, Comparative Example 8 had frequent occurrence of vent-up and had poor processability, and thus the manufacturing of the EVOH resin composition was difficult.

Furthermore, because the EVOH resin composition reduces metal adhesion between the EVOH resin and a processing machine surface (barrel, die) and has excellent long-run properties and film-forming properties, a multilayer structure including a layer made of the EVOH resin composition of each of Examples also reduces metal adhesion between the EVOH resin and a processing machine surface (barrel, die) and has excellent long-run properties and film-forming properties.

In the above Examples, specific embodiments of the present disclosure have been described, but the above Examples are merely illustrative and are not to be construed as limiting. Various modifications apparent to those skilled in the art are intended to be within the scope of the present disclosure.

### Industrial Applicability

Because the present EVOH resin composition reduces metal adhesion between an EVOH resin and a processing machine surface to prevent excessive deterioration of the resin during film formation and has excellent long-run properties and film-forming properties, the present EVOH resin composition is useful as various packaging materials for food products, seasonings such as mayonnaise and dressing, fermented foods such as miso, oil and/or fat foods such as salad oil, beverages, cosmetics, pharmaceuticals, and the like.

## Claims

1. An ethylene-vinyl alcohol copolymer composition comprising:
an ethylene-vinyl alcohol copolymer (A); and
a silicone mixture (B),
wherein the silicone mixture (B) is solid at 25°C.

2. The ethylene-vinyl alcohol copolymer composition according to claim 1, wherein a content of the silicone mixture (B) is from 0.01 to 5 mass% with respect to a total mass of the ethylene-vinyl alcohol copolymer (A) and the silicone mixture (B).

3. The ethylene-vinyl alcohol copolymer composition according to claim 1, wherein the silicone mixture (B) contains silicone and dry silica.

4. The ethylene-vinyl alcohol copolymer composition according to claim 3, wherein a mass ratio of the silicone to the dry silica (silicone/dry silica) is from 90/10 to 50/50.

5. The ethylene-vinyl alcohol copolymer composition according to claim 3, wherein the dry silica is fumed silica.

6. The ethylene-vinyl alcohol copolymer composition according to claim 1, wherein the silicone mixture (B) is solid at 250°C.

7. A method for manufacturing an ethylene-vinyl alcohol copolymer composition, the method comprising:
melt-mixing a composition raw material containing an ethylene-vinyl alcohol copolymer (A) and a silicone mixture (B),
wherein the silicone mixture (B) is solid at 25°C.

8. A pellet comprising:
the ethylene-vinyl alcohol copolymer composition according to any one of claims 1 to 6.

9. A film comprising:
the ethylene-vinyl alcohol copolymer composition according to any one of claims 1 to 6.

10. The film according to claim 9, wherein a dispersion maximum diameter of the silicone mixture (B) in the film is from 0.1 to 3 µm.

11. A method for manufacturing a film, the method comprising:
melt-molding the pellet according to claim 8.
